# EUROPÄISCHE PATENTANMELDUNG

(11) **EP 2 177 757 A1**
(43) Veröffentlichungstag der Anmeldung: **21.04.2010**
(21) Anmeldenummer: 08018158.9
(22) Anmeldetag: 16.10.2008
(51) Int. Cl.: F03G 6/00, F01K 23/10, F25B 27/00

(54) **Verfahren und Vorrichtung zur Zwischenüberhitzung mit Sattdampf bei solarer Direktverdampfung in einem solarthermischen Kraftwerk**

(71) Anmelder: Siemens Aktiengesellschaft, 80333 München (DE)
(72) Erfinder: Birnbaum, Jürgen, 90419 Nürnberg (DE); Fichtner, Markus, 91639 Wolframs-Eschenbach (DE); Haberberger, Georg, 91088 Bubenreuth (DE); Schill, Stefan, 61246 Finspong (SE); Zimmermann, Gerhard, Dr., 91315 Höchstadt/Aisch (DE)

(57) **Zusammenfassung**

Die Erfindung betrifft eine solarthermische Kraftwerksanlage mit einem Arbeitsfluidkreislauf, einem auf Direktverdampfung basierenden solaren Dampferzeuger und einer Dampfturbine zur Entspannung des Arbeitsfluids unter Abgabe technischer Arbeit, wobei der solare Dampferzeuger und die Dampfturbine in den Arbeitsfluidkreislauf geschaltet sind, mit mindestens einem Zwischenüberhitzer zur Überhitzung des Arbeitsfluids, welcher mittels Arbeitsfluid aus dem solaren Dampferzeuger beheizbar ist. Die Erfindung betrifft ferner ein Verfahren zum Betrieb einer solchen Anlage.

## Beschreibung

Die Erfindung betrifft ein Verfahren zum Betrieb einer solarthermischen Kraftwerksanlage, sowie eine solarthermische Kraftwerksanlage mit einem Arbeitsfluidkreislauf, einem auf Direktverdampfung basierenden solaren Dampferzeuger und einer Dampfturbine zur Entspannung des Arbeitsfluids unter Abgabe technischer Arbeit, wobei der solare Dampferzeuger und die Dampfturbine in den Arbeitsfluidkreislauf geschaltet sind, mit mindestens einem Zwischenüberhitzer zur Überhitzung des Arbeitsfluids.

Solarthermische Kraftwerke stellen eine alternative zur herkömmlichen Stromerzeugung dar. Ein solarthermisches Kraftwerk nutzt solare Strahlungsenergie, um elektrische Energie zu produzieren. Es besteht aus einem solaren Kraftwerksteil zur Absorption der Sonnenenergie und einem zweiten meist konventionellen Kraftwerksteil.

Der solare Kraftwerksteil umfasst dabei ein Solarfeld aus konzentrierenden Systemen. Sie sind der Hauptbestandteil des solaren Kraftwerksteils. Bekanntere konzentrierende Systeme sind dabei der Parabolrinnenkollektor, der Fresnel-Kollektor, der Solar-Turm mit Heliostaten und der Paraboloidspiegel. Parabolrinnenkollektoren und Fresnel-Kollektoren konzentrieren die Sonnenstrahlen auf ein in der Fokuslinie platziertes Absorberrohr. Dort wird die Sonnenenergie absorbiert und als Wärme an ein Wärmeträgermedium weitergegeben.

Als Wärmeträgermedium kann dabei Thermoöl, Wasser, Luft oder Salzschmelze zum Einsatz kommen.

Der konventionelle Kraftwerksteil umfasst zumeist eine Dampfturbine sowie einen Generator und einen Kondensator, wobei im Vergleich zum konventionellen Kraftwerk der Wärmeeintrag durch den Kessel durch den vom Solarfeld erzeugten Wärmeeintrag ersetzt wird.

Zurzeit werden solarthermische Kraftwerke mit indirekter Verdampfung ausgeführt, d.h. dass zwischen dem solaren Kraftwerksteil und dem konventionellen Kraftwerksteil Wärmetauscher geschaltet sind, um die im Solarfeld erzeugte Energie vom Wärmeträgermedium eines Solarfeldkreislaufes auf einen Wasser-Dampf-Kreislauf des konventionellen Kraftwerksteils zu übertragen.

Eine künftige Option stellt die direkte Verdampfung dar, bei der der Solarfeldkreislauf des solaren Kraftwerksteils und der Wasser-Dampf-Kreislauf des konventionellen Kraftwerksteils einen gemeinsamen Kreislauf bilden, wobei das Speisewasser im Solarfeld vorgewärmt, verdampft und eventuell überhitzt und so dem konventionellen Teil zugeführt wird. Der solare Kraftwerksteil ist somit ein solarer Dampferzeuger.

Mit den in einem Solarfeld mit direkter Verdampfung erreichten Dampfparametern kann der konventionelle Kraftwerksteil nicht optimal betrieben werden. Die Entspannung des Dampfes über ein möglichst großes Druckgefälle ist durch die bei der Entspannung in der Turbine entstehende Nässe sehr begrenzt. Um die Entstehung von Nässe in der Turbine bei Ausnutzung eines möglichst großen Druckgefälles zu minimieren, ist eine Zwischenüberhitzung des Dampfes notwendig.

In einem konventionellen Dampfkraftwerk wird die Zwischenüberhitzung mittels eines Wärmetauschers im Kessel durchgeführt. Bei solarthermischen Kraftwerken mit direkter Verdampfung kann die Zwischenüberhitzung in einem separaten Solarfeld ausgeführt werden. Diese Ausführung der Zwischenüberhitzung erscheint aber nicht zweckmäßig, da bei einer Zwischenüberhitzung im Solarfeld ein sehr hoher Druckverlust zu erwarten ist.

Die auf eine Vorrichtung bezogene Aufgabe der Erfindung ist daher die Angabe einer solarthermischen Kraftwerksanlage mit verbesserter Zwischenüberhitzung. Eine weitere Aufgabe ist die Angabe eines Verfahrens zum Betrieb einer solchen Kraftwerksanlage.

Diese Aufgabe wird erfindungsgemäß gelöst durch die Merkmale des Patentanspruchs 1 sowie des Patentanspruchs 14.

Weitere vorteilhafte Ausführungsformen sind in den Unteransprüchen genannt.

Die erfinderische solarthermische Kraftwerksanlage umfasst einen Arbeitsfluidkreislauf, einen auf Direktverdampfung basierenden solaren Dampferzeuger und eine Dampfturbine zur Entspannung des Arbeitsfluids unter Abgabe technischer Arbeit, wobei der solare Dampferzeuger und die Dampfturbine in den Arbeitsfluidkreislauf geschaltet sind, mit mindestens einem Zwischenüberhitzer zur Überhitzung des Arbeitsfluids, welcher mittels Arbeitsfluid aus dem solaren Dampferzeuger beheizbar ist. Dadurch kann das Arbeitsfluid ohne den bei einer Zwischenüberhitzung im Solarfeld zu erwartenden sehr hohen Druckverlust überhitzt werden.

Bevorzugt ist der Zwischenüberhitzer ein Dampf-Dampf-Wärmetauscher.

Zweckmäßigerweise ist das Arbeitsfluid aus dem solaren Dampferzeuger Sattdampf oder überhitzter Dampf.

Weiterhin bevorzugt ist es, wenn der Dampf-Dampf-Wärmetauscher primärseitig in eine Anzapfung der Dampfturbine geschaltet ist. Hierbei wird vorteilhafterweise auf eine Entnahme des höherwertigen Frischdampfes verzichtet. "Anzapfung" bedeutet eine Dampfentnahme zwischen zwei Schaufelstufen.

Vorteilhafterweise ist eine Zusatzfeuerung zur Zwischenüberhitzung in Strömungsrichtung eines Arbeitsfluids hinter den Zwischenüberhitzer geschaltet. Dadurch kann die Temperatur des zwischenüberhitzten Dampfes gleich oder sogar höher als die Frischdampftemperatur sein.

Zweckmäßigerweise ist der solare Dampferzeuger mit der Turbine über eine Frischdampfleitung verbunden, in die eine Zusatzfeuerung geschaltet ist.

Es ist vorteilhaft, den abgekühlten Dampf der Primärseite des Überhitzers zur rekuperativen Speisewasservorwärmung zu nutzen.

Je nach Dampfparameter kann ein Wasserabscheider im Kreislauf vor dem Zwischenüberhitzer zweckmäßig sein, um mit möglichst hohem Dampfgehalt in den Dampf-Dampf-Wärmetauscher auf der kalten Sekundärseite des Zwischenüberhitzers zu fahren.

Dabei ist es weiterhin zweckmäßig, wenn das Kondensat aus dem Wasserabscheider an geeigneter Stelle wieder in den Arbeitsfluidkreislauf eingebracht wird.

In vorteilhafter Ausgestaltung umfasst die solarthermische Kraftwerksanlage einen Generator zur elektrischen Energieerzeugung.

Besonders vorteilhaft umfasst die solarthermische Kraftwerksanlage Parabolrinnenkollektoren, welche über eine hohe Technologiereife verfügen und den höchsten Konzentrationsfaktor für linear konzentrierende Systeme aufweisen, wodurch hohe Prozesstemperaturen möglich sind.

In einer alternativen Ausführungsform werden Fresnel-Kollektoren verwendet. Ein Vorteil der Fresnel-Kollektoren gegenüber dem Parabolrinnenkollektor liegt in der Verrohrung und den resultierenden, vergleichsweise geringen Druckverlusten. Ein weiterer Vorteil der Fresnel-Kollektoren sind die gegenüber Parabolrinnenkollektoren weitgehend einfacheren Komponenten, die ohne hochtechnologisches Know-how herzustellen sind. Fresnel-Kollektoren sind daher kostengünstig in Anschaffung und Unterhalt.

Eine weitere vorteilhafte alternative Ausführungsform nutzt für die solare Direktverdampfung einen Solarturm, der höchste Prozesstemperaturen ermöglicht.

Aufgrund seiner sehr hohen spezifischen Wärmekapazität bzw. seiner hohen spezifischen Verdampfungsenthalpie und seiner einfachen Handhabbarkeit ist Wasser ein sehr guter Wärmeträger und somit als Arbeitsfluid sehr geeignet.

Bezogen auf das Verfahren wird die Aufgabe durch ein Verfahren zum Betrieb einer solarthermischen Kraftwerksanlage gelöst, in welcher ein Arbeitsfluid in einem Kreislauf geführt wird, bei dem das Arbeitsfluid durch solare Einstrahlung in einem solaren Dampferzeuger direkt verdampf und unter Abgabe technischer Arbeit entspannt und in einem Zwischenüberhitzer, welcher mittels Arbeitsfluid aus dem solaren Dampferzeuger geheizt wird, überhitzt wird.

Das Verfahren bedient sich der beschriebenen Vorrichtung. Die Vorteile der Vorrichtung ergeben sich daher auch für das Verfahren.

Weitere Vorteile, Merkmale und Einzelheiten der Erfindung ergeben sich aus der nachfolgenden Beschreibung bevorzugter Ausführungsbeispiele und Zeichnungen sowie aus weiteren Unteransprüchen.

Nachfolgend wird die Erfindung beispielhaft anhand der Zeichnungen näher erläutert.

Darin zeigen in vereinfachter und nicht maßstäblicher Darstellung:
- FIG 1: eine Zwischenüberhitzung mittels eines Dampf-Dampf-Wärmetauschers und Sattdampf direkt aus dem Solarfeld,
- FIG 2: eine zusätzliche Zwischenüberhitzung mittels eines zusätzlichen Dampf-Dampf-Wärmetauschers mit Entnahmedampfstrom aus einer Turbinenanzapfung,
- FIG 3: eine zusätzliche Zwischenüberhitzung mittels Zusatzfeuerung und Anheben der Frischdampfparameter mittels Zusatzfeuerung in die Frischdampfleitung und
- FIG 4: eine zusätzliche Zwischenüberhitzung mittels eines zusätzlichen Dampf-Dampf-Wärmetauschers mit Entnahmedampfstrom aus der Frischdampfleitung.

Gleiche Teile sind in allen Figuren mit denselben Bezugszeichen versehen.

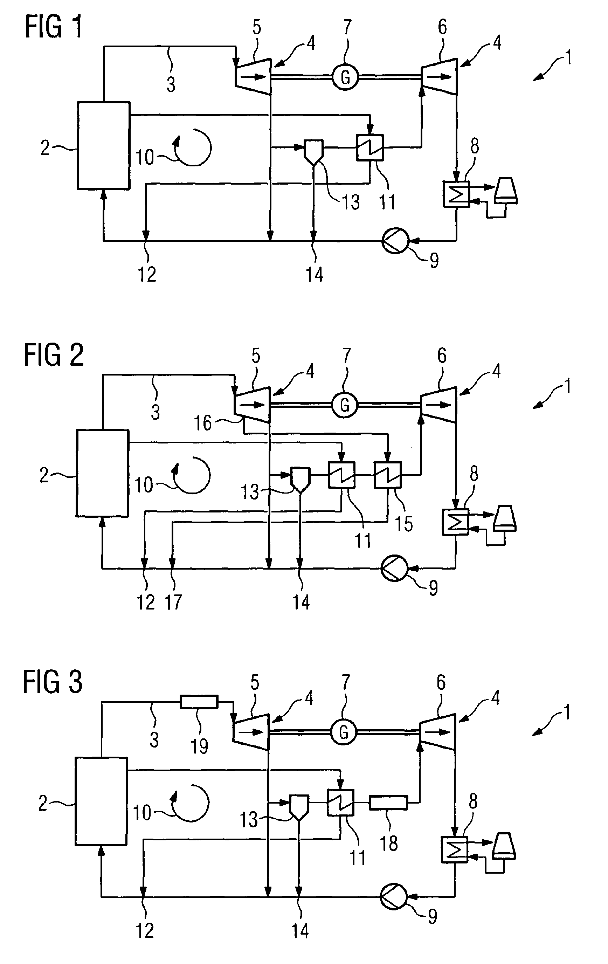

FIG 1 zeigt den schematischen Aufbau und den Kreislaufprozess einer solarthermischen Kraftwerksanlage 1 mit Direktverdampfung nach der Erfindung. Die Anlage 1 umfasst ein Solarfeld 2, in dem die Sonnenstrahlung konzentriert und in Wärmeenergie umgewandelt wird. Das Solarfeld 2 kann beispielsweise Parabolrinnenkollektoren, Fresnel-Kollektoren, Solartürme oder Paraboloidspiegelkollektoren aufweisen. Konzentrierte Sonnenstrahlung wird an ein Wärmeträgermedium abgegeben, welches verdampft und über eine Frischdampfleitung 3 in eine Dampfturbine 4 als Arbeitsfluid eingeleitet wird. Die Dampfturbine 4 umfasst eine Hochdruckturbine 5 und eine Niederdruckturbine 6, welche einen Generator 7 antreiben. In der Turbine 4 wird das Arbeitsfluid entspannt und anschließend in einem Kondensator 8 verflüssigt. Eine Speisewasserpumpe 9 pumpt das verflüssigte Wärmeträgermedium wieder zurück in das Solarfeld 2, womit der Kreislauf 10 des Wärmeträgermediums bzw. des Arbeitsfluids geschlossen ist.

Im Ausführungsbeispiel der FIG 1 wird Sattdampf aus dem Solarfeld 2 entnommen und zur Überhitzung des kalten Zwischenüberhitzungsdampfes einem Dampf-Dampf-Wärmetauscher 11 zugeführt. Der Sattdampf wird hierbei soweit abgekühlt, dass er zur rekuperativen Speisewasservorwärmung an der entsprechenden Stelle im Speisewassersystem genutzt werden kann (Einspeisestelle 12). Vor der Zwischenüberhitzung kann, falls dies aufgrund der Dampfparameter notwendig sein sollte, noch ein Wasserabscheider 13 in den Kreislauf 10 eingebaut werden, um mit einem möglichst hohen Dampfgehalt in den Dampf-Dampf-Wärmetauscher 11 auf der kalten Zwischenüberhitzungsseite zu fahren. Das Kondensat aus dem Wasserabscheider 13 wird an einer geeigneten Stelle (Einspeisestelle 14) wieder in den Speisewasserkreislauf 10 eingebracht. Die Temperatur des heißen Zwischenüberhitzungsdampfes ergibt sich durch die Grädigkeit des Dampf-Dampf-Wärmetauschers 11 und die Sattdampftemperatur bei dem durch das Solarfeld 2 und den Druckverlust des Dampf-Dampf-Wärmetauschers 11 vorgegebenen Druck.

FIG 2 zeigt eine zweite Ausführung der Zwischenüberhitzung, bei der der Dampf nach dem Austritt aus der Hochdruckturbine 5 einer Zwischenüberhitzung in zwei Dampf-Dampf-Wärmetauschern 11,15 zugeführt wird. Der erste Dampf-Dampf-Wärmetauscher 11 wird primärseitig von Sattdampf aus dem Solarfeld 2 durchströmt. Der Dampf für den zweiten Dampf-Dampf-Wärmetauscher 15 wird aus einer Anzapfung 16 der Hochdruckturbine 5 entnommen und zu einer zweiten Zwischenüberhitzung des teilentspannten Dampfes im Dampf-Dampf-Wärmetauscher 15 verwendet. Die aus diesen Zwischenüberhitzungen in den Wärmetauschern 11,15 abgekühlten Dämpfe des Arbeitsfluids, welches entweder als Dampf oder als Kondensat anfällt, werden an den entsprechenden Stellen vor Eintritt in das Solarfeld 2 zur rekuperativen Speisewasservorwärmung genutzt (Einspeisestellen 12,17). Vor die beiden Dampf-Dampf-Wärmetauscher 11,15 kann optional noch ein Wasserabscheider 13 in die Zwischenüberhitzung eingebaut werden (je nach Dampfparameter der kalten Zwischenüberhitzung), um mit einem möglichst hohen Dampfgehalt in die Wärmetauscher 11,15 zu fahren.

Im Ausführungsbeispiel der FIG 3 wird Sattdampf aus dem Solarfeld 2 in einem Dampf-Dampf-Wärmetauscher 11 für eine erste Überhitzung des teilentspannten Dampfes verwendet, der anschließend mittels einer Zusatzfeuerung 18 auf die gewünschten Parameter überhitzt wird. Im Hinblick auf eine Prozessoptimierung und Wirkungsgradsteigerung können auch noch zusätzlich die Frischdampfparameter zum Ausgleich von Temperaturschwankungen infolge Wolkendurchzugs mittels einer Zusatzfeuerung 19 in der Frischdampfleitung 3 angehoben werden.

## Patentansprüche

1. Solarthermische Kraftwerksanlage (1) mit einem Arbeitsfluidkreislauf, einem auf Direktverdampfung basierenden solaren Dampferzeuger und einer Dampfturbine (4) zur Entspannung des Arbeitsfluids unter Abgabe technischer Arbeit, wobei der solare Dampferzeuger und die Dampfturbine (4) in den Arbeitsfluidkreislauf (10) geschaltet sind, mit mindestens einem Zwischenüberhitzer zur Überhitzung des Arbeitsfluids, welcher mittels Arbeitsfluid aus dem solaren Dampferzeuger beheizbar ist.

2. Die solarthermische Kraftwerksanlage (1) nach Anspruch 1, wobei der mindestens eine Zwischenüberhitzer ein Dampf-Dampf-Wärmetauscher (11) ist.

3. Die solarthermische Kraftwerksanlage (1) nach Anspruch 1 oder 2, wobei das Arbeitsfluid aus dem solaren Dampferzeuger Sattdampf oder überhitzter Dampf ist.

4. Die solarthermische Kraftwerksanlage (1) nach einem der Ansprüche 1 bis 3, wobei ein weiterer Dampf-Dampf-Wärmetauscher zur Zwischenüberhitzung des Arbeitsfluids primärseitig in eine Anzapfung (16) der Dampfturbine (4) geschaltet ist.

5. Die solarthermische Kraftwerksanlage (1) nach einem der Ansprüche 1 bis 3, mit einer Zusatzfeuerung (18) zur Zwischenüberhitzung von Arbeitsfluid.

6. Die solarthermische Kraftwerksanlage (1) nach einem der Ansprüche 1 bis 3, wobei der solare Dampferzeuger mit der Turbine (4) über eine Frischdampfleitung (3) verbunden ist.

7. Die solarthermische Kraftwerksanlage (1) nach Anspruch 6, wobei eine Zusatzfeuerung (19) in die Frischdampfleitung (3) geschaltet ist.

8. Solarthermische Kraftwerksanlage (1) nach einem der vorhergehenden Ansprüche, wobei eine Primärseite des Dampf-Dampf-Wärmetauschers (11,15) zur rekuperativen Speisewasservorwärmung an Einspeisestellen (12,17) in den Kreislauf (10) geschaltet ist.

9. Solarthermische Kraftwerksanlage (1) nach einem der vorhergehenden Ansprüche, wobei ein Wasserabscheider (13) dem Zwischenüberhitzer vorgeschaltet ist.

10. Solarthermische Kraftwerksanlage (1) nach Anspruch 9, wobei ein Kondensatausgang des Wasserabscheiders (13) in den Arbeitsfluidkreislauf (10) geschaltet ist.

11. Solarthermische Kraftwerksanlage (1) nach einem der vorhergehenden Ansprüche, weiter umfassend einen Generator (7) zur elektrischen Energieerzeugung.

12. Solarthermische Kraftwerksanlage (1) nach einem der vorhergehenden Ansprüche, wobei der solare Dampferzeuger Parabolrinnenkollektoren, Fresnel-Kollektoren, oder mindestens einen Solarturm umfasst.

13. Solarthermische Kraftwerksanlage (1) nach einem der vorhergehenden Ansprüche, wobei das Arbeitsfluid Wasser bzw. Wasserdampf ist.

14. Verfahren zum Betrieb einer solarthermischen Kraftwerksanlage (1), in welcher ein Arbeitsfluid in einem Kreislauf (10) geführt wird, beim dem das Arbeitsfluid durch solare Einstrahlung in einem solaren Dampferzeuger direkt verdampft und unter Abgabe technischer Arbeit entspannt und in einem Zwischenüberhitzer, welcher mittels Arbeitsfluid aus dem solaren Dampferzeuger geheizt wird, überhitzt wird.
